# EUROPEAN PATENT SPECIFICATION

(11) **EP 2 525 983 B1**
(45) Date of publication and mention of the grant of the patent: **11.06.2014**
(21) Application number: 11708318.8
(22) Date of filing: 21.01.2011
(51) Int. Cl.: B41M 1/34, B41M 1/12, B41F 15/08, C03C 17/245, C03C 15/00

(54) **A METHOD FOR THE REALIZATION OF LOGOS, WRITINGS AND AREAS ON GLASS BY MEANS OF SERIGRAPHIC APPLICATION**
VERFAHREN ZUR REALISIERUNG VON LOGOS, SCHRIFT UND BEREICHEN AUF GLAS MITTELS SIEBDRUCKAUFBRINGUNG
PROCÉDÉ POUR LA RÉALISATION DE LOGOS, D'INSCRIPTIONS ET DE ZONES SUR VERRE AU MOYEN D'UNE APPLICATION SÉRIGRAPHIQUE

(30) Priority: 21.01.2010 IT PI20100007
(43) Date of publication of application: 28.11.2012
(73) Proprietor: Schott Italvetro S.p.a., 55023 Borgo a Mozzano (LU) (IT)
(72) Inventor: ZAGO, Giuseppe, I-55022 Bagni di Lucca (LU) (IT); GROSS, Bernhard Josef, I-55100 Lucca (LU) (IT); AVI, Nicola, CH-6900 Lugano (CH)
(74) Representative: Turini, Laura
(86) International application number: PCT/IB2011/050285
(87) International publication number: WO 2011/089573

(56) References cited:
- CN-A- 1 165 839
- CN-A- 1 277 944
- CN-A- 1 820 961
- KR-A- 20050 068 116
- US-A1- 2008 250 952

## Description

### Technical field

The present invention concerns the technical field relative to the production of glass.

In particular, the invention refers to an innovative method of production of glass destined to household electrical appliances and reproducing designs in general in the shape of, for example, writings and/or logos obtained through the use of a serigraphic technique.

### Background Art

It is known that the household electrical appliances currently in use many times include, in some of their parts, one or more than one plate glasses that can have either a specific technical functionality or also a purely decorative aim.

Just for exemplification purposes, we mention ordinary household ovens. The oven, as it is well known, includes a flap door that allows to introduce food in the cooking chamber. The door, in order to allow the visualization of the food and the check of the cooking status of it, is therefore at least partially provided with a piece of glass through which it is possible to view the inside of the chamber. A further mask in glass can then be arranged in correspondence of the different control knobs of the oven itself (obviously, unless a Touch system is included). The mask will be appropriately perforated in order to allow its application and the corresponding passage of the said knobs.

Other cases of use of plate glasses in household electrical appliances can concern, for example, the stovetops of the gas hot plates, which can be entirely realized through a perforated plate to allow the passage of the burners.

The viewing panels of washing machines are another example of use of the glass integrated to the household electrical appliance.

In these and other cases, it is known that the glass frequently has drawings, logos or areas reproduced on it that indicate, for example, the name of the producer or indications of use or decorations in general. In the case, for example, of glass stovetops, it is necessary to reproduce on the glass, in correspondence of the fire lighting knobs, the indications of rotation to allow the switch on, the switch off and the adjustment of the intensity of the flame. The same applies for masks applied to the oven.

A first realizing technique of such writings, very simple and immediate, uses ink prints. However, in addition to a poor aesthetic effect, the ink results easily degradable with the passing time and little resistant to the external attacks of chemical nature and of temperature (it is enough to think of the chemical agents for household cleaning). In that sense, the result is therefore not the desired one.

Such a technical problem has been afforded by looking for a solution that would guarantee writings both of good aesthetic impact and long-lasting. An answer in that sense has been obtained through a printing technique using materials of glassy nature (generally vitrifiable varnishes) and therefore very similar to the structure of the plate itself on which they are applied. In accordance with such a known printing technique, a design in glassy material (for example, of white colour) is sprayed on the custom-cut plate and then exsiccated in order to dry it. The subsequent heating (generally around 650 °C after temper, for example) generally takes both the plate and the design to the plastic state, thus determining an intimate glass connection between design and plate and that is consolidated with the subsequent cooling.

Nevertheless, even if the aesthetic impact is valuable, a first inconvenience is related to the fact that all the eventual subsequent thermal treatments to be realized on the plate glass become hardly manageable. In fact, the high temperatures cause a return to the plastic state both of the glass and of the design produced on it. During such thermal treatments it is therefore absolutely necessary to avoid to lean the plate on the side reproducing the writing. The plastic state would in fact cause the printing or removal of the writing itself, therefore the inevitable waste of the product. It is therefore evident that such a solution is strongly limitative, objectively determining transport problems of the plate itself along the pre-established paths of thermal treatment.

A practical example of such an inconvenience is found, for example, when it is necessary to realize a contrast colour (or a background colour) to place behind the design, in order to render it well visible on a transparent plate. In fact, in case that contrast and design were applied distinctly each one on a face opposed to the other one, inevitably one of the two faces would have to lean on guide rollers of the oven for the exsiccation. As described above, this would cause a waste of the product or even the breakdown of the machinery itself. For the technical reasons mentioned above, it is evident that it is absolutely necessary that contrast and design are both realized one behind the other but always in correspondence of the same face of the plate. Being the contrast applied behind the drawing on the same face of the plate, it is therefore evident that, in most cases, the writing thus obtained results, in order to be visible, arranged on the face of the plate that, once mounted in use on the electrical appliance, faces directly the electrical appliance itself.

In that case, therefore, the writing often results poorly visible, above all due to the reflections of light that hit the plate itself. In fact, even if the plate results transparent, the reading of the writing is often difficult. In addition, in case of use of glass with reflecting treatment (such glass is frequently used in the field in order to obtain a greater aesthetic impact), a mirror effect is created that renders even more difficult the reading of the characters, logos and/or of the writing through the thickness of the glass.

The patent application CN1820961 is considered the closest prior art for the present invention.

The invention discloses a method of screen printing to fabricate colour patterns on a glass material previously etched with acid. A colour is distributed on the acid etched patterns via the screen printing and the plate is afterwards dried in an oven. In this manner, the pattern results more full and more vivid.

### Disclosure of invention

It is therefore the aim of the present invention to provide a method for the realization of designs on a plate glass provided with an external layer of superficial coating 12 (generally called coating 12), that is characters, logos, writings and/or areas in general, which result absolutely thermal proof from eventual subsequent thermal treatments to which the plate will be subjected.

It is therefore the aim of the present invention to provide a method that allows to realize such characters, logos, writings and/or areas so that it is possible to lean the plate, during eventual subsequent thermal treatments, on the side where such a graphic has been realized, and without this being the cause of waste of the product and/or risk of breakdown or damage of the machinery for the said thermal treatment.

It is therefore the aim of the present invention to provide a method that allows the realization of a high quality and long-lasting graphic and that can appear well visible on the face at sight of the electrical appliance.

It is also the aim of the present invention to provide a method that allows the realization of characters, logos, writings and/or areas on the plate in glass that is economical and quick and therefore productively profitable.

These and other aims are therefore obtained with the present method for the realization of a design in general on a plate glass covered by a superficial coating layer (12), particularly a plate for electrical appliances, as per claim 1.

Such a method includes the application on the plate glass, provided with such a superficial coating (12), of a substantially acid substance (10) according to a serigraphic technique.

In order to understand better the invention, it is necessary to explicit that the term *"substantially acid substance",* used as in the present document and in the claims attached to it, defines a composition per se not necessarily acid at room temperature before being applied, but capable of freeing a corrosive acid component in the operative conditions to which the chemical engraving is realized (that is during the heating phase).

In particular, a first phase is included wherein a serigraphic silk fabric (4) is arranged in correspondence of the face (1') of the plate (1) on which to realize the design (6). The silk fabric comprises a non printed part, that is provided with a plurality of open holes (6) reproducing the design. The application of the substantially acid substance (10) then takes place on the serigraphic silk fabric (4) at least in correspondence of such free holes, in such a way that through them a deposit of the said substance on the face (1') of the plate glass takes place. After the phase of deposit of the substantially acid substance the further operation of heating of the plate (1) is included. In such a manner, the substance deposited on the plate reacts, causing, in correspondence of the application area, the removal of the superficial coating layer (12) that covers it.

The design is now obtained by removing exclusively the superficial coating layer, making the underlying glass come to light and thus creating a particularly valued effect.

It is therefore evident that the design reproduced with such a process results now absolutely thermal proof, being completely free from the use of vitrifiable varnishes or glassy materials in general. In addition, apart from the obtainment of high quality and a considerable increase of duration in time of the design, it is now possible to have the freedom of leaning the plate on the side where the writing has been realized during all the eventual subsequent thermal treatments, without any risk of waste of the product or breakdown or damage of the machinery.

It is therefore now possible to apply an eventual contrast colour on the face opposed to that on which the design has been realized, being now able to lean the plate on the side of the writing into the drying or temper ovens. In such a manner, the writing will result arranged on the face of the plate opposed to that of application of the electrical appliance, and therefore appearing much more visible and no more inhibited by fastidious reflections of light.

Last, the application of a substantially acid substance on the surface to be treated is a relatively simple, quick and economical operation because it is realizable with a high productive performance, that is with low waste of product.

Further advantages are deduced from the dependent claims.

### Brief description of drawings

Further characteristics and drawings of the present method for the realization of a design 6 in general on a plate glass (1) provided with a superficial coating layer (12), according to the invention, will result clearer with the description of some embodiments that follows, made to illustrate but not to limit, with reference to the annexed drawings, wherein:
- Figure 1 describes a generic plate glass and a conveyor belt 2;
- Figure 2 shows a series of plates arranged on the belt;
- Figure 3 shows the printing section while figure 4 shows the application of the form on the plate;
- Figures 5 and 6 show a possible constructive detail of print;
- Figures from 7 to 9 show a phase of application of the substantially acid substance on the form;
- Figure 10 shows the heating phase of the plate with the substance applied on it;
- Figures 11 and 12 show a plate glass with superficial coating treatment and the result of the removal through the substantially acid substance of the superficial coating layer 12;
- Figure 13 shows an eventual subsequent phase of temper.

### Description of one preferred embodiment

The annexed figures describe in detail the method of realization of a design on a plate glass covered with a superficial coating layer (12) through a technique of the serigraphic type and the relative equipment applied.

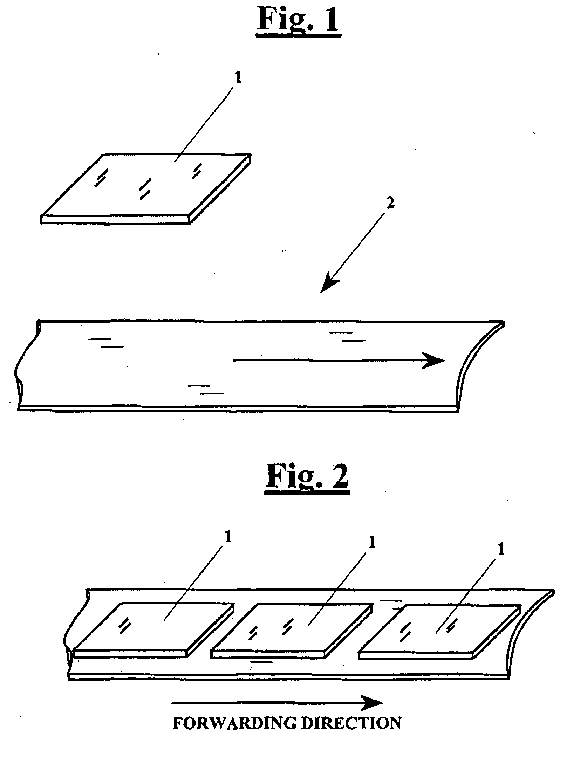

Figure 1 shows a custom-cut plate 1 in order to arrange it along a work path 2 wherein the various phases of realization of the desired design take place.

As shown in figure 2, a conveyor belt 2, or equivalently guide rollers, are placed for the movement of the plates during the work phases. To that aim, the belt represented transports a plurality of plates 1 in sequence.

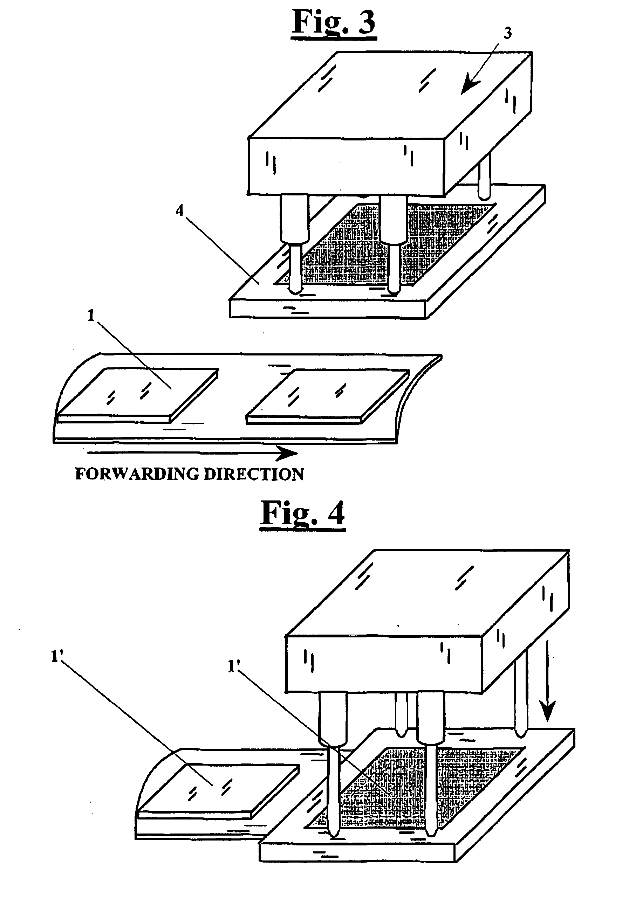

In accordance with a first work phase, as schematically shown in figure 3 and figure 4, along the work path an appropriate print section 3 is included that comprises a print 4 provided with a plurality of holes reproducing a pre-determined design. The print is manoeuvred in such a way as to be able to be applied over the face 1' of the plate glass 1 on which the design wants to be reproduced (that is the face opposite to that that leans on the belt). Figure 4 shows the phase wherein the print is taken above the plate in contact with it and with the face 1' highlighted for clarity purposes with a thin dotted line.

Even if prints of different nature may be used, preferably the print used is a serigraphic one, that is a serigraphic silk fabric 4.

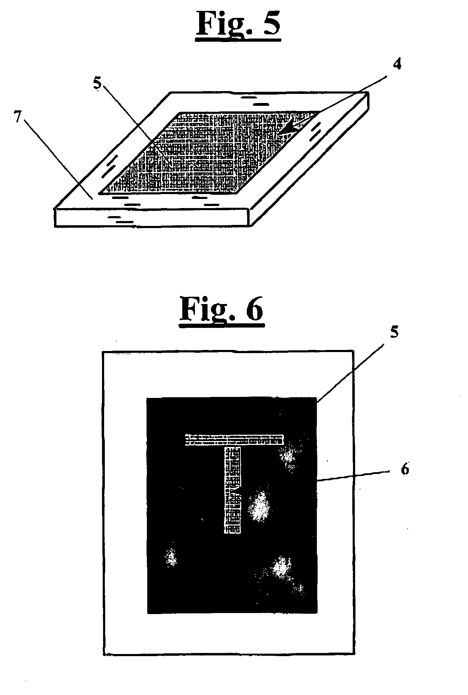

The serigraphic silk fabric is realized through the use of a micro-perforated fabric 5, that is constituted of a micro-perforated knitted fabric or weft, appropriately printed (see figure 5). In accordance with such a printing process of the fabric, a part of the holes present on it results occluded by a paste or a varnish dried in appropriate ovens in such a way as to leave only the holes that reproduce on the fabric the design 6. Figure 6 shows just for clarification purposes, in dark colour, the fabric with the occluded holes (printed part of the fabric), while the open holes 6 are represented in light colour (non-printed part of the fabric) according to a pre-defined design (in that case the example represents a T).

As represented in figure 5 and 6, the fabric is then supported by an external frame 7, or equivalently by a frame 7, the dimension of which is such as to be able to enclose the plate 1 when it is overlapped to it. In that manner, it is possible to overlap the fabric 5 of the serigraphic silk fabric 4 in direct contact to the face 1' of the plate. In that manner, the open holes reproducing the design 6 face directly the face of the plate in correspondence of the pre-chosen area on which to reproduce the design.

It is also evident that, on the basis of the designs to be realized and of the different dimensions of plates, an infinite multiplicity of silk fabrics or prints in general can be realized, rendering the productive process easily reproducible in series.

Going on with the description, once the serigraphic silk fabric is arranged above the plate as shown in figure 4, the subsequent phase of deposit through the open holes 6 of it of a substantially acid substance 10 takes place. The substance can be in different forms, for example in the form of varnish, wax, paste or also liquid.

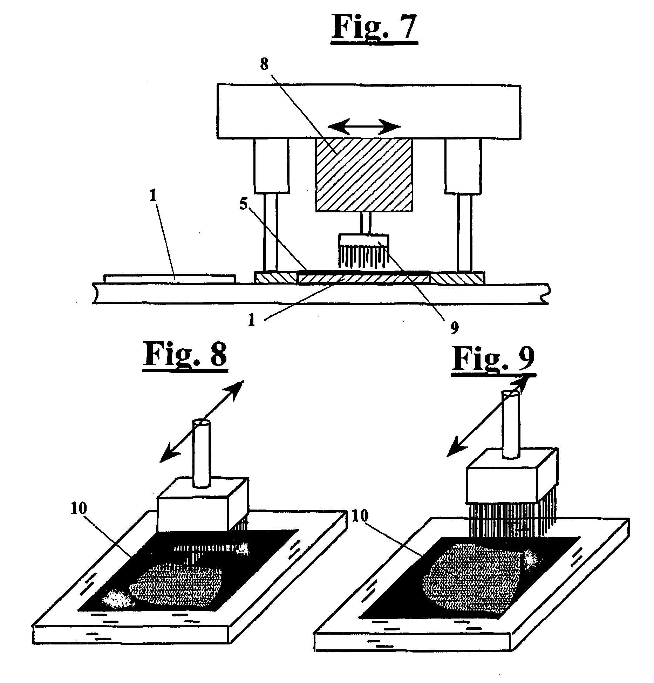

In that sense, on the basis of the type of substance used, an appropriate machinery is arranged with the aim of spreading it on the frame. Figure 7 shows an example of solution wherein a dispenser device 8 that comprises a carriage 8, for example pre-loaded with the substance, is slidingly mounted on the print section 3. In such a manner, the cart can be activated in order to slide in such a way that a brush 9, or a distributing roller, distributes uniformly on the silk fabric, at least in the area of interest, the said substance (in the case of varnishes, waxes or pastes in general).

At this point, the substance starts to pass through the free holes 6 of the silk fabric to enter in direct contact with the surface 1' of the plate, in particular with the superficial coating (12). Figure 8 further shows an axonometric view of such a phase wherein the substance 10 in the form of gel is highlighted partially spread on the fabric in correspondence of the area of interest. Figure 9 shows the entire area of interest covered.

The solution is absolutely equivalent in the case of a substantially acid substance in the liquid form. In that case, the machinery will be able to, for example, be provided with an appropriate spray dispenser.

The substance passes on the plate in accordance with the design reproduced by the serigraphic silk fabric and, once that it has got in contact with it, it starts to react removing progressively the superficial coating layer 12 and reproducing the design.

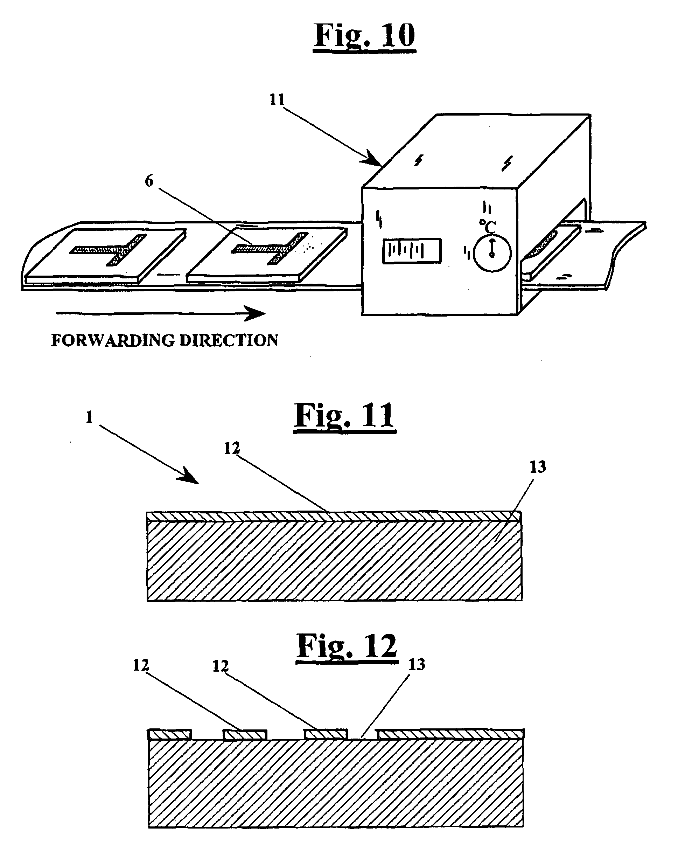

Figure 10 shows the subsequent heating phase of the plate with the substance arranged on it according to the design 6 reproduced, in such a way that the substance itself is either activated with the temperature or has a greater penetrating effect, thus resulting more efficient. To that aim, it is therefore included an appropriate heating section 11 into which the plates are introduced. Once the heating is finished, a phase of removal or cleaning takes place that serves to take the residues out of the acid substance. The phase of removal can be realized with the simple washing with water or with ultrasound techniques.

The said composition of the substantially acid substance comprises an appropriate mixture of basic and acid compounds.

Preferably, the said composition comprises an appropriate mixture of organic and inorganic compounds, basic and acid ones; preferably, at least one organic compound and at least one inorganic compound, at least a basic one and at least an acid one.

The said organic compounds are preferably selected from organic bases, preferably tertiary amines such as, just as a way of example absolutely non limiting, trialkylamine, for example triethylamine; triethanolamine, for example triethanolamine; N-alkyl-pirimidine, for example N-methyl- or N-ethyl- or N-isopropyl- pirimidine; N,N'-dialkyl-piperazine, for example N,N'-dimethyl- or N,N'-dietyl- or N,N'-diisopropyl- or N-methyl-N'-ethyl- or N-methyl/ethyl-N'-isopropyl-piperazine; N-methylpyrrolidone, for example N-methyl-2-pyrrolidone.

The said inorganic compounds are preferably selected from inorganic acids, preferably selected from hydrochloric acid, hydrobromic acid, hydrofluoric acid, nitric acid, phosphoric acid and/or its derivatives.

According to the needs the said composition can also comprise basic compounds constituted for example by inorganic bases, such as hydroxides of the alkaline or alkaline-earth metals.

According to the needs the said composition can also comprise organic acid compounds constituted for example by acetic acid and its derivatives, for example trifluoroacetic acid.

In a particularly preferred embodiment, the acid compound is at least one selected from hydrochloric acid, nitric acid, hydrofluoric acid, phosphoric acid, trifluoroacetic acid; for example, phosphoric acid and its derivatives.

In a particularly preferred embodiment, the basic compound is at least one selected from triethanolamine, N-methyl-piperidine, N-methyl-2-pirrolidone, sodium hydroxide, potassium hydroxide; for example, N-methyl-2-pirrolidone.

In the composition of the substantially acid substance of the present invention, the basic compound is present in a percentage in weight comprised between 5% and 75%; preferably, between 10% and 65%; better still, between 20% and 60%; better still, between 25% and 50%.

In the composition of the substantially acid substance of the present invention, the acid compound is present in a percentage in weight comprised between 5% and 75%; preferably, between 10% and 65%; better still, between 20% and 60%; better still, between 25% and 50%.

The said percentages are appropriately varied according with the pH that wants to be obtained during the heating phase. For example, the said pH can vary from about ≤1 to about 3,5.

The compositions described above can further comprise other additional ingredients, for example additives, excipients, stabilizers, pH regulators, carriers, dispersants, solubilizers, adjuvants and so on, suitable to provide both the form of application of interest and to increase the desired capacities of penetration and adherence to the surface of the plate to be notched.

By appropriately controlling the time **t** of duration of the heating of the substance, the temperature **T** of heating and the acidity value of the substance itself it is possible to control on the whole the degree of penetration in the plate in the time unit. Preferably, the time of duration of the heating is comprised between 1 min and 60 min; preferably, between 2 min and 45 min; better still, between 3 min and 30 min.

In turn, the temperature applied during the heating phase is comprised between 120°C and 500°C; preferably, between 130°C and 450°C; better still, between 135°C and 400°C.

In such a manner, on the basis of the product used, it is possible to calculate exactly for how long and at what temperature the plate must remain being fired in order to "impress" a design in a certain depth of thickness as to remove the superficial coating treatment (12).

Such an aspect is of significant importance in view of the fact that in such a technical field the plates are, as already anticipated, notoriously often provided with the superficial coating layer generally of the reflecting type.

In this regard, it is important to underline that any type of plate glass provided with a superficial coating layer known in the background art can be subjected to the process that is the subject of the present invention.

Just as a way of example, absolutely non limiting the wide potential of the invention itself, it is here possible to mention plate glasses provided with a coating, for example based on Metal oxides, wherein the said superficial coating treatment has been applied through the well-known CVD (Chemical Vapor Deposition) or PVD (Physical Vapor Deposition) processes or equivalent ones.

Figure 11 and 12 show an example of application that shows the removal of only the superficial coating layer. Figure 11 shows a section of the glass 1 having an ordinary glass base 13 and a superficial coating treatment 12. Figure 12 shows a removal of some parts of the superficial layer 12 in such a way as to make the underlying glass 13 come to light according to the preestablished design. In such a manner, the design results particularly distinct and evident since the chemical erosion brings to surface the underlying glass layer 13, removing exactly the equivalent thickness of superficial coating treatment 12. The effect of a design is obtained that stands out by means of the contrast between the superficial coating treatment and the clear and transparent of the underlying glass that remains perfectly neutral 13.

Once the design has been realized it is possible to realize, if necessary, all the subsequent thermal treatments desired, for example the hardening or colouring of contrast with hardening.

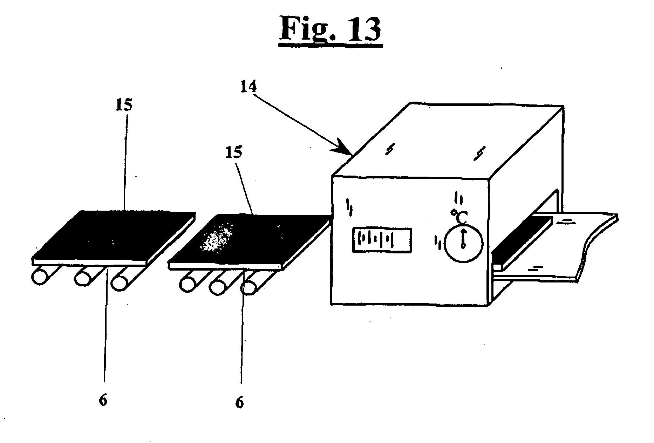

To that aim, as schematically indicated in figure 13, a contrast colour 15 can be applied in correspondence of the face opposite to the one of the writing 6 (that is the face 1') and therefore fired in such a way as to dry it. The drying takes place before the classical process of hardening (or tempering) wherein the glass acquires particular characteristics of mechanical resistance and at the same time the contrast colour is bound intimately to the structure of the glass on which it results applied. In that sense, the varnished plate can be leant on the side of the design previously realized, without for this incurring the risk of damage or breakdown of the rollers or conveyor belts of the hardening oven. The plate therefore is put in the oven where it is taken to a temperature superior to 500°C to be then quickly cooled.

It results evident as well from the present method that the plate glass to be treated can anyway be of any measure and type, without for this moving apart from the present inventive concept.

Moreover, the term design or graphic is here to be intended in an absolutely non limiting manner, therefore including the whole of writings, logos, lines and areas of any shape and nature.

## Claims

1. A method for the realization of a design (6) in general on a plate glass (1) covered by a layer of superficial coating (12), in particular plates for household electrical appliances, and comprising the operations of:
- Application of a serigraphic silk fabric (4) in correspondence of the face (1') of the plate (1) on which to realize the design (6), the said face (1') being covered by a layer of superficial coating (12) and the said serigraphic silk fabric comprising open holes (6) reproducing the design (6);
- Subsequent application of an acid substance (10) on the serigraphic silk fabric at least in correspondence of the open holes in such a way that, through the said holes (6), a deposit of the substance on the face (1') takes place;
- The acid substance being inactive at room temperature;
**and characterized in that,** after the deposit phase of the acid substance, the further operation of heating of the plate (1) is included, in such a way that the acid substance deposited on the plate reacts to the temperature, causing in the deposit area the removal of the superficial coating layer (12).

2. A method, according to claim 1, wherein the heating phase and the acidity value of the substance are controlled in a such a manner to remove only the superficial coating layer (12) making the underlying glass come to light.

3. A method, according to claim 1 or 2, wherein the said acid substance is a composition comprising at least one organic compound and at least one inorganic compound, at least a basic one and at least an acid one.

4. A method, according to claim 3, wherein in the said composition the basic compound is present in a percentage in weight comprised between 5% and 75%; preferably, comprised between 10% and 65%; better still, comprised between 20% and 60%; better still, comprised between 25% and 50%; and the acid compound is present in a percentage in weight comprised between 5% and 75%; preferably, comprised between 10% and 65%; better still, comprised between 20% and 60%; better still, comprised between 25% and 50%.

5. A method, according to one or more of claims from 1 to 4, wherein the pH during the heating phase varies from about ≤1 to about 3,5.

6. A method, according to one or more of the preceding claims from 1 to 5, wherein a phase of control of the penetration of the acid substance in the plate is included through the adjustment of at least one or more than one of the following parameters:
- Acidity value of the substance used;
- Time **t** of duration of the heating phase;
- Temperature **T** at which the said heating phase takes place.

7. A method, according to claim 6, wherein the heating time is comprised between 1 min and 60 min; better still, is comprised between 2 min and 45 min; better still, between 3 min and 30 min.

8. A method, according to claim 6, wherein the temperature applied during the heating phase is comprised between 120°C and 500°C; preferably, is comprised between 130°C and 450°C; better still, from 135°C and 400°C.

9. A method, according to one or more of the preceding claims from 1 to 8, wherein, after the said heating operation, an operation of removal of the substance applied is included, the said operation of removal taking place according to at least one of the following methods:
- Washing of the plate;
- Use of ultrasound.

10. A method, according to claim 9, wherein after the phase of removal of the said acid substance one of the following further operations is included at choice:
- Hardening of the plate;
- Application of contrast colour (15) on the opposite face to that of application of the acid substance and subsequent hardening of the plate.

11. A method, according to one or more of the preceding claims from 1 to 10, wherein the said substantially acid substance is in the form of a paste or varnish, the said operation of application of the chemical substance comprising an operation of spreading of the said paste or varnish on the serigraphic silk fabric (4) in such a way that the substance runs through the silk fabric (4), lying on the face (1') of the plate according to the edges of writing defined by the free holes (6) of the silk fabric.

12. A method, according to one or more of the preceding claims from 1 to 11, wherein the said acid substance is in the liquid form, the said operation of application of the chemical substance comprising an operation of spraying of the said substance through the free holes (6) of the silk fabric (4).

13. A method, according to one or more of the preceding claims from 1 to 12, wherein the serigraphic silk fabric (4) used is obtained through an operation of printing of the fabric (5) and comprising the operation of application of a hardening paste or varnish in such a way as to leave open holes (6) reproducing a design and subsequent heating.

14. An equipment for the realization of a design (6) in general on a plate glass (1) provided with a superficial coating layer (12) and comprising:
- A print section (3) comprising a serigraphic silk fabric (4) furnished with a plurality of open holes (6) reproducing a design;
- A distributing device (8) configured to release on the silk fabric (4) an acid substance (10) in such a way that, as a consequence of the application of the silk fabric on the plate, the substance applied on the silk fabric is deposited through the said holes (6) on the face (1') of the plate in such a way as to engrave it and;
- A heating chamber (11) is further included to operate the heating of the plate (1) in such a way that the acid substance deposited on the plate reacts, causing the removal of the superficial coating layer (12).
**Characterizing in that** the equipment further comprises an acid substance which is inactive at room temperature.

## Patentansprüche

1. Verfahren zur Ausführung eines Musters (6) im Allgemeinen auf einem Flachglas (1) überzogen mit einer Lage Oberflächenbeschichtung (12), insbesondere Scheiben für elektrische Haushaltsgeräte, und welches folgende Vorgänge umfasst:
- Aufbringen eines Siebdruckseidengewebe (4) entsprechend der Seite (1') der Scheibe (1), auf der das Muster (6) auszuführen ist, wobei die genannte Seite (1') mit einer Lage Oberflächenbeschichtung (12) bedeckt ist und das genannte Siebdruckseidengewebe offene Löcher (6) beinhaltet, die das Muster (6) wiedergeben;
- Nachträgliches Aufbringen einer sauren Substanz (10) auf dem Siebdruckseidengewebe zumindest entsprechend der offenen Löcher derart, dass durch die genannten Löcher (6) eine Ablagerung der Substanz auf der Seite (1') stattfindet,
- Die saure Substanz bei Raumtemperatur inaktiv ist;
**und dadurch gekennzeichnet, dass** nach der Ablagerungsphase der sauren Substanz der weitere Vorgang der Erwärmung der Scheibe (1) eingeschlossen ist, derart, dass die auf der Scheibe abgelagerte saure Substanz auf die Temperatur reagiert, was in dem Ablagerungsbereich zu einem Abtrag der Oberflächenbeschichtungslage (12) führt.

2. Verfahren nach Anspruch 1, wobei die Aufheizphase und der Säurewert der Substanz in einer solchen Weise gesteuert werden, dass nur die Oberflächenbeschichtungslage (12) abgetragen wird, sodass das darunterliegende Glas zum Vorschein kommt.

3. Verfahren nach Anspruch 1 oder 2, wobei die genannte saure Substanz eine Zusammensetzung ist, die mindestens eine organische Verbindung und mindestens eine anorganische Verbindung umfasst, mindestens eine basische und mindestens eine saure.

4. Verfahren nach Anspruch 3, wobei in der genannten Zusammensetzung die basische Verbindung mit einem Prozentsatz des Gewichts zwischen 5 % und 75 % vorhanden ist; vorzugsweise zwischen 10 % und 65 %; besser noch zwischen 20 % und 60 %; noch besser zwischen 25 % und 50 %; und die saure Verbindung mit einem Prozentsatz des Gewichts zwischen 5 % und 75 % vorhanden ist; vorzugsweise zwischen 10 % und 65 %; besser noch zwischen 20 % und 60 %; noch besser zwischen 25 % und 50 %.

5. Verfahren nach einem oder mehreren der Ansprüche 1 bis 4, wobei der pH-Wert während der Aufheizphase zwischen etwa ≤ 1 bis etwa 3,5 variiert.

6. Verfahren nach einem oder mehreren der vorangehenden Ansprüche 1 bis 5, wobei eine Phase der Kontrolle des Eindringens der sauren Substanz in die Scheibe durch die Anpassung von mindestens einem oder mehr als einem der folgenden Parameter eingeschlossen ist:
- Säurewert der verwendeten Substanz;
- Zeit **t** der Dauer der Aufheizphase;
- Temperatur **T,** bei der die genannte Aufheizphase erfolgt.

7. Verfahren nach Anspruch 6, wobei die Aufheizzeit zwischen 1 min und 60 min liegt; besser noch zwischen 2 min und 45 min liegt; noch besser zwischen 3 min und 30 min.

8. Verfahren nach Anspruch 6, wobei die während der Heizphase angewandte Temperatur zwischen 120 °C und 500 °C liegt; vorzugsweise zwischen 130 °C und 450 °C liegt; besser noch zwischen 135 °C und 400 °C.

9. Verfahren nach einem oder mehreren der vorangehenden Ansprüche 1 bis 8, wobei nach dem genannten Aufheizvorgang ein Vorgang des Entfernens der aufgebrachten Substanz eingeschlossen ist, und der Vorgang des Entfernens nach mindestens einem der folgenden Verfahren erfolgt:
- Waschen der Scheibe;
- Verwendung von Ultraschall.

10. Verfahren nach Anspruch 9, wobei nach der Phase der Entfernung der genannten sauren Substanz einer der folgenden weiteren Vorgänge wahlweise eingeschlossen ist:
- Härten der Scheibe;
- Aufbringen der Kontrastfarbe (15) auf der gegenüberliegenden Seite der Anwendung der sauren Substanz und anschließendes Härten der Scheibe.

11. Verfahren nach einem oder mehreren der vorangehenden Ansprüche 1 bis 10, wobei die genannte im Wesentlichen saure Substanz in Form einer Paste oder Lack vorliegt, und der besagte Vorgang des Auftragens der chemischen Substanz einen Vorgang des Verteilens der genannten Paste oder des Lacks auf dem Siebdruckseidengewebe (4) in der Weise umfasst, dass die Substanz durch das Seidengewebe (4) läuft, das auf der Seite (1') der Scheibe entsprechend den Rändern des Beschreibens liegt, die durch die freien Löcher (6) des Seidengewebes festgelegt sind.

12. Verfahren nach einem oder mehreren der vorangehenden Ansprüche 1 bis 11, wobei die genannte saure Substanz in der flüssigen Form vorliegt, und der genannte Vorgang des Auftragens der chemischen Substanz einen Vorgang des Sprühens der genannten Substanz durch die freien Löcher (6) des Seidengewebes (4) umfasst.

13. Verfahren nach einem oder mehreren der vorangehenden Ansprüche 1 bis 12, wobei das verwendete Siebdruckseidengewebe (4) durch einen Vorgang des Druckens des Gewebes (5) gewonnen wird und den Vorgang des Auftragens einer Härterpaste oder eines Lacks dergestalt umfasst, offene Löcher (6) zu belassen, die ein Muster reproduzieren, und anschließendes Erhitzen.

14. Vorrichtung zum Ausführen eines Musters (6) im Allgemeinen auf einem mit einer Oberflächenbeschichtungslage (12) versehenen Flachglas (1) und umfassend:
- Einen Druckbereich (3) umfassend ein Siebdruckseidengewebe (4), das mit einer Vielzahl von offenen Löchern (6), die ein Muster reproduzieren, ausgestattet ist;
- Eine Verteilvorrichtung (8), die konfiguriert ist, auf dem Seidengewebe (4) eine saure Substanz (10) derart freizusetzen, dass als Folge des Auftragens des Seidengewebes auf der Scheibe die auf dem Seidengewebe aufgetragene Substanz durch die genannten Löcher (6) auf der Seite (1') der Scheibe derart abgelagert wird, dass sie sie graviert, und;
- Eine Heizkammer (11), die ferner eingeschlossen ist, um das Erhitzen der Scheibe (1) derart durchzuführen, dass die auf der Scheibe abgelagerte saure Substanz reagiert, was zu einem Abtrag der Oberflächenbeschichtungslage (12) führt.
**Dadurch gekennzeichnet, dass** die Vorrichtung ferner eine saure Substanz umfasst, die bei Raumtemperatur inaktiv ist.

## Revendications

1. Une méthode pour la réalisation d'un dessin (6) en général sur une plaque de verre (1) recouverte d'une couche de revêtement superficiel (12), en particulier des plaques pour des appareils électrodomestiques, et comportant les opérations de :
- Application d'un tissu de sérigraphie en soie (4) en correspondance avec la face (1') de la plaque (1) sur laquelle le dessin est réalisé (6), ladite face (1') étant recouverte d'une couche de revêtement superficiel (12) et ledit tissu de sérigraphie en soie comportant des trous ouverts (6) pour la reproduction du dessin (6),
- l'application ultérieure d'une substance acide (10) sur le tissu de sérigraphie en soie, au moins en correspondance avec les trous ouverts de telle manière que, à travers lesdits trous (6), un dépôt de la substance avec la face (1') prenne place ;
- La substance acide étant inactive à la température de la pièce ;
**et caractérisée en cela** qu'après la phase de dépôt de la substance acide, l'opération ultérieure de chauffage de la plaque (1) est comprise, de telle manière que la substance acide déposée sur la plaque réagisse avec la température, causant dans la zone de dépôt la suppression de la couche de revêtement superficielle (12).

2. Une méthode, selon la revendication 1, dans laquelle la phase de chauffage et la valeur d'acidité de la substance sont contrôlées de telle manière que soit retirée uniquement la couche de revêtement superficiel (12) en faisant apparaître le verre sous-jacent à la lumière.

3. Une méthode, selon les revendications 1 ou 2, dans laquelle ladite substance acide est une composition comprenant au moins un composé organique et au moins un composé inorganique, au moins une base et au moins un acide.

4. Une méthode, selon la revendication 3, dans laquelle dans ladite composition le composé base est présent à pourcentage de poids compris entre 5 % et 75 %, de préférence, compris entre 10 % et 65 %, mieux encore, compris entre 20 % et 60 %, mieux encore, ou compris entre 25 % et 50 %, et le composé acide est présent à un pourcentage de poids compris entre 5 % an 75 % ; de préférence, compris entre 10 % et 65 %, mieux encore, compris entre 20% et 60%, mieux encore, ou compris entre 25 % et 50 %.

5. Une méthode, selon une ou plusieurs des revendications 1 à 4, dans laquelle le pH durant la phase de chauffage varie d'environ ≤1 à environ 3,5.

6. Une méthode, selon une ou plusieurs revendications des revendications précédentes 1 à 5, dans laquelle une phase de contrôle de la pénétration de la substance acide dans la plaque est comprise par la mise au point d'au moins un ou plusieurs des paramètres suivants :
- Valeur de l'acidité de la substance utilisée ;
- Temps t représentant la durée de la phase de chauffage ;
- Température T à laquelle ladite phase de chauffage prend place.

7. Une méthode, selon la revendication 6, dans laquelle le temps de chauffage est compris entre 1 et 60 min, mieux encore, est compris entre 2 et 45 min, mieux encore, ou entre 3 et 30 min.

8. Une méthode, selon la revendication 6, dans laquelle la température appliquée durant la phase de chauffage est comprise entre 120 °C et 500 °C, de préférence, est comprise entre 130 °C et 450 °C, mieux encore, ou entre 135 °C et 400 °C.

9. Une méthode, selon une ou plusieurs des revendications précédentes de 1 à 8, dans laquelle, après ladite opération de chauffage, une opération de suppression de la substance appliquée est incluse, ladite opération de retrait prenant place selon l'une au moins des méthodes ci-après :
- lavage de la plaque ;
- utilisation d'ultrasons.

10. Une méthode, selon la revendication 9, dans laquelle, après la phase de suppression de ladite substance l'une des opérations suivantes est incluse, au choix :
- durcissement de la plaque ;
- application d'une couleur contrastée (15) sur la face opposée à celle de l'application de la substance acide puis durcissement ultérieur de la plaque.

11. Une méthode, selon une ou plusieurs des revendications précédentes de 1 à 10, dans laquelle, ladite substance substantiellement acide se trouve dans la forme d'une pâte de vernis, ladite opération d'application de la substance chimique comprenant une opération de vaporisation de ladite pâte ou vernis sur le tissu de sérigraphie en soie (4) de telle manière que la substance passe à travers le tissu en soie (4), couché sur la face (1') de la plaque selon le bord du dessin, par les trous libres (6) du tissu en soie.

12. Une méthode, selon une ou plusieurs des revendications précédentes de 1 à 11, dans laquelle ladite substance acide se trouve sous forme liquide, ladite opération d'application de la substance chimique comprenant une opération de dispersion de ladite substance à travers les trous libres (6) du tissu de soie (4).

13. Une méthode, selon une ou plusieurs des revendications précédentes de 1 à 12, dans laquelle le tissu de sérigraphie en soie (4) utilisé est obtenu par une opération d'impression du tissu (5) et comprend l'opération d'application d'une pâte durcissante ou d'un vernis de façon à laisser ouverts les trous (6) en reproduisant le dessin et en le chauffant ultérieurement.

14. Un équipement pour la réalisation d'un dessin (6) en général sur une plaque de verre (1) fournie avec une couche de revêtement superficielle (12) et comprenant :
- Une section impression (3) comprenant un tissu de sérigraphie en soie (4) doté d'un certain nombre de trous ouverts (6) reproduisant un dessin ;
- Un dispositif distributeur (8) configuré pour relâcher sur le tissu en soie (4) une substance acide (10) de telle manière, que du fait de l'application du tissu en soie sur la plaque, la substance appliquée sur le tissu en soie soit déposée à travers lesdits trous (6) sur la face (1') de la plaque de telle sorte de la graver et,
- Une chambre de chauffage (11) est de plus comprise pour faire fonctionner le chauffage de la plaque (1) de telle manière que la substance acide déposée sur la plaque réagisse, causant la suppression de la couche de revêtement superficielle (12).
**Caractérisant en cela** l'équipement comprend en outre la substance acide qui est inactive à la température de la pièce.
